# EUROPÄISCHE PATENTANMELDUNG

(11) **EP 1 684 459 A1**
(43) Veröffentlichungstag der Anmeldung: **26.07.2006**
(21) Anmeldenummer: 05001441.4
(22) Anmeldetag: 25.01.2005
(51) Int. Cl.: H04L 12/18, H04N 7/173

(54) **Rundfunk zu einem mobilen Kommunikationsendgerät mit Rückkanalführung durch ein drahtloses Netzwerk**

(71) Anmelder: SIEMENS AKTIENGESELLSCHAFT, 80333 München (DE)
(72) Erfinder: Berg, Stefan, 46395 Bocholt (DE); Gröting, Wolfgang, 46149 Oberhausen (DE); Naumann, Mirko, 82538 Geretsried (DE)

(57) **Zusammenfassung**

Die Erfindung betrifft ein Verfahren zur Kommunikation zwischen einem Broadcast-Server (BS), der Broadcast-Nutzdaten bereit stellt, die ungerichtet über eine Antenne ausgestrahlt werden, und einem Kommunikationsendgerät (K), das eine erste Schnittstelle (S1) zum Empfang der von der Antenne ausgestrahlten Daten aufweist, wobei von der Antenne zusätzlich Adressdaten ausgestrahlt werden, die einem Betreiber des Broadcast-Servers (BS) zugeordnet sind und von dem Kommunikationsendgerät (K) auf der Basis der Adressdaten mit Hilfe eines zur Verarbeitung dieser Adressdaten ausgelegten Kommunikationsprotokolls über eine zweite Schnittstelle (S2) eine Kommunikationsverbindung zu einem externen Server herstellt wird, auf dem die Adressdaten als Zieladressdaten hinterlegt sind, so dass ein Rückkanal für Nutzdaten bereit gestellt wird, die sich auf die Broadcast-Nutzdaten beziehen.

## Beschreibung

Die Erfindung bezieht sich auf ein Verfahren zur Kommunikation zwischen einem Broadcast-Server, der Broadcast-Nutzdaten bereitstellt, die ungerichtet über eine Antenne ausgestrahlt werden, und einem Kommunikationsendgerät, das eine erste Schnittstelle zum Empfang der von der Antenne ausgestrahlten Daten aufweist, sowie auf ein zur Durchführung des Verfahrens ausgelegtes Kommunikationsendgerät.

Ein Trend bei der Weiterentwicklung gerade auch mobiler Kommunikationsendgeräte besteht darin, dass sie zum Empfang von Broadcast-Nutzdaten hergerichtet sind, d. h. Nutzdaten empfangen und wiedergeben können, die einem DVB-Standard, wie DVB-H (Handheld), entsprechen. Erste mobile Kommunikationsendgeräte sind bereits auf dem Markt, die über die genannte Funktionalität verfügen.

Für die Nutzung eines Broadcast-Dienstes ist es typisch, dass lediglich der Down-Link vorgesehen ist, denn eine Datenübertragung findet ausschließlich in der Richtung von dem die Daten zur Verfügung stellenden Broadcast-Server zu dem Kommunikationsendgerät hin statt.

Die über die Antenne ausgestrahlten Broadcast-Nutzdaten können mit Inhalten, wie beispielsweise Werbung, versehen sein, so dass einem Benutzer des Kommunikationsendgerätes Produkte oder Dienstleistungen veranschaulicht werden, die er erwerben bzw. in Anspruch nehmen möchte.

Sofern der Benutzer Interesse an einer angebotenen Dienstleistung oder einem angepriesenen Produkt hat, steht er vor dem Problem, mit dem Hersteller bzw. Anbieter Kontakt aufnehmen zu müssen, um die zugehörige geschäftliche Transaktion durchzuführen. Zu diesem Zweck enthalten gerade Werbeinhalte häufig Adressinformationen, wie eine Internetadresse eines jeweiligen Anbieters, so dass der Benutzer des Kommunikationsendgerätes beispielsweise über seinen Personalcomputer online eine Bestellung aufgeben kann. Dieses Verfahren zum Tätigen einer geschäftlichen Transaktion aufgrund eines betrachteten Werbeinhalts wird als recht umständlich angesehen.

Ausgehend hiervon liegt der Erfindung die Aufgabe zugrunde, ein Verfahren zur Kommunikation zwischen einem Broadcast-Server und einem Kommunikationsendgerät anzugeben, das eine Tätigung einer geschäftlichen Transaktion aufgrund der Inhalte der empfangenen Broadcast-Nutzdaten vereinfacht. Außerdem soll ein Kommunikationsendgerät angegeben werden, das ein solches Verfahren unterstützt.

Die Aufgabe wird hinsichtlich des Verfahrens gelöst durch ein Verfahren zur Kommunikation zwischen einem Broadcast-Server, der Broadcast-Nutzdaten bereit stellt, die ungerichtet über eine Antenne ausgestrahlt werden, und einem Kommunikationsendgerät, das eine erste Schnittstelle zum Empfang der von der Antenne ausgestrahlten Daten aufweist, wobei von der Antenne zusätzlich Adressdaten ausgestrahlt werden, die einem Betreiber eines Rückkanal-Dienstes zugeordnet sind und von dem Kommunikationsendgerät auf der Basis der Adressdaten mit Hilfe eines zur Verarbeitung dieser Adressdaten ausgelegten Kommunikationsprotokolls über eine zweite Schnittstelle eine Kommunikationsverbindung zu einem dem Betreiber des Rückkanal-Dienstes zugeordneten externen Server herstellt wird, auf dem die Adressdaten als Zieladressdaten hinterlegt sind, so dass ein Rückkanal für Nutzdaten bereit gestellt wird, die sich auf die Broadcast-Nutzdaten beziehen.

Als Betreiber des Rückkanal-Dienstes kommen in Betracht: der Betreiber des Broadcast-Servers selbst, wenn beispielsweise der Rückkanal Informationen beinhaltet, die sich auf die Art der über die Antenne auszusendenden Nutzdaten beziehen; ein Hersteller/Dienstleister, der unter Nutzung des Broadcast-Servers Werbeinhalte verbreitet, die Teil der von der Antenne aus gesendeten Nutzdaten sind. So kann sich der Betreiber des Rückkanal-Dienstes bei aufeinander folgenden, ausgestrahlten Werbespots unterschiedlicher Anbieter von Werbespot zu Werbespot ändern, wenn jeder der Anbieter einen eigenen Rückkanal-Dienst betreibt. In diesem Fall wäre jedem Anbieter ein eigener externer Server zugewiesen. Ebenso ist es möglich, dass der externe Server von einer Mehrzahl Anbieter gemeinsam genutzt wird, der zwischen dem Benutzer des Kommunikationsendgerätes und dem jeweiligen Anbieter abgeschlossene Transaktionen verwaltet.

Eine Vereinfachung des bestehenden Verfahrens zum Tätigen einer geschäftlichen Transaktion aufgrund von Informationen, die den Broadcast-Nutzdaten enthalten sind, ergibt sich dadurch, dass das Verfahren in besonders einfacher Weise einen Rückkanal für Nutzdaten bereit stellt, die sich auf die Broadcast-Nutzdaten beziehen.

Zu diesem Zweck wird sowohl auf dem externen Server, der beispielsweise von demselben Dienstanbieter betrieben wird wie der Broadcast-Server, der zum Aussenden der Broadcast-Nutzdaten dient, und dem Kommunikationsendgerät dasselbe Kommunikationsprotokoll verwendet, dessen zugehörige Adressdaten zum Aufbau des Rückkanals genutzt werden. Die in dem Broadcast-Nutzdatenstrom enthaltenen Adressdaten werden von dem Kommunikationsendgerät extrahiert und im Rahmen des Kommunikationsprotokolls als Zieladressdaten verwendet, so dass eine Kommunikationsverbindung zu dem externen Server aufgebaut werden kann.

Dabei kann der Broadcast-Server, der die Nutzdaten bereit stellt, unmittelbar mit dem externen Server verbunden sein, d. h. ohne dass weitere Netzwerkelemente zwischengeschaltet sind. Diese Ausführungsform ist insbesondere dann sinnvoll, wenn der Rückkanal Steuerungsinformationen beispielsweise für die über die Antenne auszusendenden Nutzdaten enthält, wie die Auswahl einer Kameraeinstellung bei einer Sportübertragung. Wenn demgegenüber der Rückkanal zur Ausführung einer geschäftlichen Transaktion benutzt wird, bei der die von dem Kommunikationsendgerät über den Rückkanal ausgesandten Signale sich beispielsweise auf einen Werbeinhalt beziehen, kann der Rückkanal bei dem externen Server enden, denn eine weitere Kommunikationsverbindung zu dem Broadcast-Server ist nicht erforderlich.

Es ist alternativ möglich, dass der externe Server von einem IP-Multimedia-Untersystem bereitgestellt wird, das abgekürzt auch mit "IMS" bezeichnet wird. Bei dieser Ausführungsform des Verfahrens liegt der externe Server innerhalb des IMS. Sowohl der Betreiber des Broadcast-Servers als auch der Benutzer des Kommunikationsendgerätes greifen auf diesen Server zu, wenn eine geschäftliche Transaktion über den eingerichteten Rückkanal von statten geht. IMS ist eine Multimediaplattform für paketorientierte Zugangsnetze wie UMTS, EDGE, GPRS oder W-LAN. Es ermöglicht Mobilfunkbetreibern, eine reichhaltige Auswahl an Sprach-, Multimedia- und Datendiensten auf der Basis von IP (Internet Protocol), SIP (Session Initiation Protocol) und 3GPP (3 G Partnerchip Project) Release 5 anzubieten. IMS setzt auf dem SIP-Protokoll auf, so dass bevorzugt auf Seiten des Kommunikationsendgerätes und des externen Servers als das Protokoll das standardisierte Session-Initiation-Protocol verwendet wird und die Adressdaten diesem Protokoll entsprechen.

Bei dem Verfahren wird bevorzugt die Kommunikationsverbindung zwischen dem Kommunikationsendgerät und dem externen Server von dem Kommunikationsendgerät aus ausgelöst. Dem liegt zugrunde, dass auf Seiten des Kommunikationsendgerätes von dessen Benutzer eine Feststellung getroffen wird, dass er Interesse an einem bestimmten, beispielsweise Werbeinhalt der Broadcast-Daten hat. In diesem Zusammenhang kann der Benutzer an die Kommunikationsverbindung zu dem externen Server herstellen, wonach unter Benutzung eines geeigneten Anwendungsprogramms ein Bestellvorgang zwischen dem Kommunikationsendgerät und dem Server abgewickelt wird. Dabei wird selbstverständlich die Adresse des Servers, die aus den Broadcast-Nutzdaten extrahiert ist, benutzt. Als Spezialfall wird die Transaktion von dem Broadcast-Server gesteuert, der dann selbst den externen Server bildet. Dies kann beispielsweise dann der Fall sein, wenn beispielsweise Anbieter von Waren/Dienstleistungen bei dem Betreiber des Broadcast-Dienstes gleichzeitig einen Rückkanal-Dienst in Anspruch nehmen, nicht aber selbst einen eigenen externen Server bereitstellen wollen.

Der externe Server kann auch ausschließlich für ein Voten verwendet werden, wobei dann keine Transaktion vorgenommen wird, sondern ausschließlich Vote-Informationen auf dem externen Server gespeichert werden.

Die oben genannte Aufgabe wird hinsichtlich des Kommunikationsendgerätes gelöst durch ein Kommunikationsendgerät mit einer ersten Schnittstelle zur Kommunikation mit einem Broadcast-Server, der Broadcast-Nutzdaten bereit stellt, und einer zweiten Schnittstelle, wobei es zum Extrahieren von Adressdaten aus einem empfangenen Broadcast-Nutzdatenstrom ausgebildet ist und derart ausgebildet ist, dass es auf der Basis der Adressdaten mit Hilfe eines zur Verarbeitung dieser Adressdaten ausgelegten Kommunikationsprotokolls über eine zweite Schnittstelle eine Kommunikation zu einem externen Server herstellt, auf dem die Adressdaten als Zieladressdaten hinterlegt sind.

Das Kommunikationsendgerät muss somit mit zwei Kommunikationsprotokollen ausgestattet sein, nämlich einem ersten für die Kommunikation mit dem Broadcast-Server zum Wiedergeben der Broadcast-Nutzdaten und einen zweiten, das es gestattet, die extrahierten Adressdaten für den Aufbau einer Kommunikationsverbindung über die zweite Schnittstelle mit dem externen Server herzustellen.

Bevorzugt liegt auf dem Kommunikationsendgerät als das Kommunikationsprotokoll für die zweite Schnittstelle das standardisierte Session-Initiation-Protocol vor und entsprechen die Adressdaten diesem Protokoll. Durch diese Merkmale wird das Kommunikationsendgerät in die Lage versetzt, sog. SIP-Sessions mit einem externen Server aufzubauen, auf dem ebenfalls das SIP-Protokoll implementiert ist. Da eine SIP-Adresse domänenübergreifend ist, kann der externe Server global eindeutig und von einer verwendeten Broadcast-Technologie unabhängig erreicht werden.

Die Erfindung wird anhand von Ausführungsbeispielen unter Bezugnahme auf die Zeichnungen noch näher erläutert. Es zeigen:
- Figur 1: eine schematische Darstellung einer Netzwerkanordnung für eine Broadcast-Übertragung mit Rückkanal,
- Figur 2: eine schematische Darstellung einer zur Figur 1 alternativen Netzwerk-Anordnung für eine Broadcast-Übertragung mit Rückkanal und
- Figur 3: eine schematische Darstellung einer zu den Figuren 1 und 2 alternativen Netzwerk-Anordnung für eine Broadcast-Übertragung mit Rückkanal.

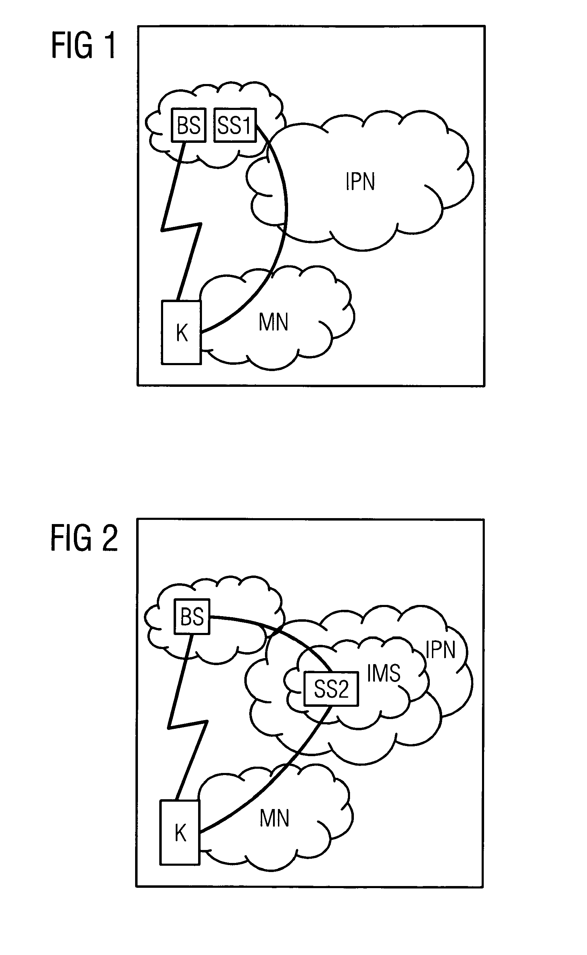

Die Netzwerkanordnung nach Figur 1 enthält als wesentliche Komponenten ein mobiles Kommunikationsendgerät K und einen Broadcast-Server BS, von dem aus über eine nicht dargestellte Antenne Broadcast-Daten eines Dienstanbieters ausgestrahlt werden. Zum Empfang der Broadcast-Daten (DVB-H) ist das mobile Kommunikationsendgerät K mit einer geeigneten ersten Schnittstelle S1 in Form einer Antenne ausgestattet, deren empfangene Broadcast-Signale, wie beispielsweise eine Fernsehübertragung, auf dem mobilen Kommunikationsendgerät K wiedergegeben werden.

Die Broadcast-Daten, die von dem Broadcast-Server BS aus ausgesendet werden, enthalten Adressdaten des Dienstanbieters in Form einer Adresse nach dem SIP-Protokoll. Hierbei handelt es sich um den Standard der IETF für u. a. sog. "Voice-over-IP"-Verbindungen. Der Standard "RFC 3261" regelt außerdem allgemein den Aufbau von Kommunikationssitzungen mit beliebigen Multimediaströmen, wie Konferenzen, Computerspielen, usw.. Das SIP-Protokoll ist ein Anwendungsschichtprotokoll zum Aufbau, Verändern und Abbau von Verbindungen zwischen zwei oder mehreren Endgeräten der Netzwerkstruktur. Da dieses Protokoll in Fachkreisen geläufig ist, wird es an dieser Stelle nicht näher erläutert. Wesentliches Merkmal ist es, dass jedes Endgerät des Netzwerks eine eigene SIP-Adresse aufweist, anhand der Kommunikationsverbindungen zwischen den Endgeräten hergestellt werden können.

Im vorliegenden Ausführungsbeispiel extrahiert das mobile Kommunikationsendgerät K die SIP-Adressdaten eines SIP-Servers aus den Broadcast-Nutzdaten, wobei diese SIP-Adressdaten sich auf einen SIP-Server SS1 beziehen, der im Ausführungsbeispiel nach Figur 1 unmittelbar mit dem Broadcast-Server BS verbunden ist.

Das SIP-Protokoll ist ebenfalls auf den mobilen Kommunikationsendgerät K implementiert, dem selbst eine eigene SIP-Adresse zugewiesen ist.

Damit liegen sämtliche Voraussetzungen dafür vor, dass über das SIP-Protokoll eine Kommunikationsverbindung zwischen dem mobilen Kommunikationsendgerät und dem SIP-Server auf Seiten des Dienstanbieters über ein zwischengeschaltetes IP-Netzwerk IPN aufgebaut werden kann.

Das Extrahieren der SIP-Adressdaten des SIP-Servers SS1 aus den Broadcast-Nutzdaten kann in verschiedener Weise erfolgen. Beispielsweise kann auf einer Anzeigeneinrichtung des mobilen Kommunikationsendgerätes K eine automatisch in den Broadcast-Nutzdaten erkannte SIP-Adresse angezeigt werden. Ebenso ist es möglich, in einem Speicherbereich des mobilen Kommunikationsendgerätes K eine automatisch aus dem Broadcast-Nutzdaten extrahierte SIP-Adresse zu speichern, so dass sie für eine spätere Benutzung zur Einrichtung eines Rückkanals über ein Mobilfunknetzwerk MN und ein IP-Netzwerk IPN zur Verfügung steht.

Das Format der SIP-Adressen des mobilen Kommunikationsendgerätes K und des SIP-Servers SS entspricht demjenigen des standardisierten SIP-Protokolls, nämlich "sip:benutzername@hostadresse". Eine solche SIP-URL des mobilen Kommunikationsendgerätes K wird von dem angerufenen SIP-Server SS identifiziert, wonach eine Kommunikationsverbindung hergestellt wird. Im Rahmen dieser Kommunikationsverbindung können Transaktionen vorgenommen werden, die sich auf Inhalte der von dem mobilen Kommunikationsendgerät K empfangenen Broadcast-Daten beziehen. Beispiele hierfür sind eine geschäftliche Transaktion über ein in den Broadcast-Daten beworbenes Produkt, Beeinflussung von Eigenschaften der Broadcast-Daten wie bei der Übertragung einer Sportsendung die Auswahl einer Kameraeinstellung usw.

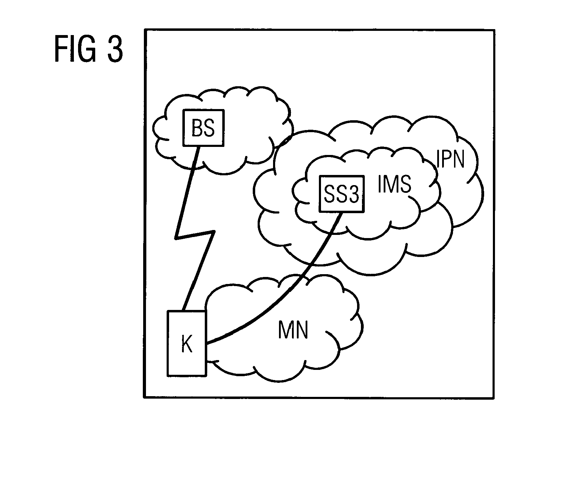

Die Netzwerkanordnung nach Figur 2 zeigt ebenfalls das mobile Kommunikationsendgerät K und den Broadcast-Server BS, von dem die Broadcast-Nutzdaten ausgestrahlt werden, die auch SIP-Adressdaten eines SIP-Servers SS2 enthalten. Die Adressdaten können beispielsweise im Broadcast-Kanal gesendet werden und aufgrund eines speziellen, für sie vorgesehenen Formates einfach herausgefiltert und in ihre für Adressen relevanten Bestandteile zerlegt werden. Adressdaten können in Form einer "URI" nach dem Standard "RFC 2396" oder in Form einer IP-Adresse vorliegen. Es ist anzunehmen, dass DVB-H-Daten als IP-Pakete versendet werden. In diesem Fall ist das Herausfiltern und Parsen einer IP-Adresse oder einer URI sehr einfach zu realisieren. Eine solche Realisierung liegt im Wissensbereich des Fachmanns.

In Abweichung zu der Netzwerkanordnung nach Figur 1 ist der SIP-Server SS2 nunmehr nicht im Einflussbereich des DienstAnbieters unmittelbar dem Broadcast-Server BS benachbart angeordnet. Er ist vielmehr Teil des IP-Multimedia-Untersystems IMS, das sich wiederum innerhalb des IP-Netzwerks IPN befindet.

Ein Rückkanal von dem mobilen Kommunikationsendgerät K zu dem Broadcast-Server BS ist nunmehr in zwei Abschnitte aufgeteilt. Ein erster Teilabschnitt des Rückkanals reicht von dem mobilen Kommunikationsendgerät K über das Mobilfunknetzwerk MN (WLAN, UMTS, GSM, GPRS) zu dem SIP-Server SS2, auf dem SIP-Adressdaten für den Broadcast-Dienstanbieter hinterlegt sind. Eine Transaktion zum Beispiel Ankauf eines Produkts, das im Rahmen der Broadcast-Übertragung beworben worden ist, findet nunmehr zwischen dem mobilen Kommunikationsendgerät K und dem SIP-Server SS2 statt. Das Ergebnis einer solchen Transaktion wird dem Broadcast-Server BS im Rahmen eines zweiten Abschnitts des Rückkanals zwischen ihm und dem SIP-Server im Rahmen einer zweiten SIP-Session mitgeteilt. Insofern sind sowohl der Benutzer des mobilen Kommunikationsendgerätes K als auch der Dienstanbieter, der den Broadcast-Server betreibt, Nutzer des SIP-Servers SS2 innerhalb des IP-Multimedia-Suchsystems IMS.

Die Netzwerkanordnung nach Figur 2 hat den Vorteil, dass, im Gegensatz zu Figur 1, der Dienstanbieter keine Investitionen dahingehend tätigen muss, einen eigenen SIP-Server zu betreiben. Wenn der Rückkanal-Dienst vom Broadcast-Server BS gesteuert wird, wirkt der externe Server SS2 lediglich als Proxy-Server. Wenn der externe Server SS2 den Rückkanal-Dienst selbst steuert, kann ein zweiter Abschnitt des Rückkanals zwischen dem externen Server SS2 und dem Broadcast-Server BS auch in einem anderen Protokoll als das Session-Initiation-Protocol realisiert werden.

Wie bereits oben erwähnt, geht der Aufbau des Rückkanals von einer zweiten Schnittstelle S2 des mobilen Kommunikationsendgerätes K aus. Für diese Schnittstelle S2 können verschiedene Zugangstechnologien vorgesehen sein, wie W-LAN, UMTS, GSM, GPRS. Auch ist es möglich, dass das mobile Kommunikationsendgerät K über mehrere Mobilfunk-Schnittstellen verfügt, unter denen eine Auswahl zu treffen ist, wenn es darum geht, den Rückkanal zu dem Broadcast-Server BS aufzubauen. In diesem Zusammenhang ist es denkbar, dass auf dem mobilen Kommunikationsendgerät K ein Anwendungsprogramm implementiert ist, in dem Präferenzen des Benutzers für den Aufbau des Rückkanals hinterlegt sind, aufgrund denen eine automatische Auswahl der als zweite Schnittstelle zu nutzenden Schnittstelle von Statten gehen kann.

Figur 3 zeigt eine schematische Darstellung einer weiteren alternativen Netzwerk-Anordnung für eine Broadcast-Übertragung mit Rückkanal. Wesentliches Merkmal dieser Ausführungsform ist es, das der Betreiber des Broadcast-Dienstes, anders als bei den Figuren 1 und 2, hier nicht gleich dem Betreiber des Rückkanal-Dienstes ist. Vielmehr unterhält der Betreiber des Rückkanal-Dienstes den externen SIP-Server SS3, der in irgendeiner Weise, d. h. ggf. über weitere zwischengeschaltete Netzwerkelemente, mit dem Kommunikationsendgerät K verbunden ist. Der SIP-Server SS3 steuert den Rückkanal-Dienst und ist Zieladresse für auf dem Kommunikationsendgerät K generierte Nutzdaten, die sich auf die Broadcast-Nutzdaten beziehen. Diese Ausführungsform gestattet es nicht, gezielt Einfluss auf die Broadcast-Nutzdaten zu nehmen, die über die Antenne ausgestrahlt werden. Sie ist vielmehr darauf beschränkt, die Durchführung von Transaktionen zu unterstützen, die sich beispielsweise auf Werbeinhalte beziehen, die als Broadcast-Nutzdaten ausgestrahlt und von dem Kommunikationsendgerät K empfangen worden sind. Auch kann der SIP-Server SS3 zum Speichern von Voting-Daten benutzt werden, die sich ebenfalls auf die Broadcast-Nutzdaten beziehen, jedoch ohne Zusammenhang zu einer geschäftlichen Transaktion auf dem SIP-Server SS3 zu speichern sind. Der SIP-Server SS3 kann beispielsweise von mehreren Anbietern, die jeweils für Werbespots verantwortlich sind, die als Tel der Broadcast-Nutzdaten ausgestrahlt werden, gemeinsam genutzt werden. In diesem Fall sind die Anbieter gemeinsam Betreiber des Rückkanal-Dienstes. Der SIP-Server SS3 kann jedoch auch einem einzelnen Anbieter zugeordnet sein, d. h. sich innerhalb eines firmeneigenen Netzwerkes befinden, das von dem Anbieter betrieben wird.

## Patentansprüche

1. Verfahren zur Kommunikation zwischen einem Broadcast-Server (BS), der Broadcast-Nutzdaten bereit stellt, die ungerichtet über eine Antenne ausgestrahlt werden, und einem Kommunikationsendgerät (K), das eine erste Schnittstelle (S1) zum Empfang der von der Antenne ausgestrahlten Daten aufweist,
**dadurch gekennzeichnet, dass**
von der Antenne zusätzlich Adressdaten ausgestrahlt werden, die einem Betreiber eines Rückkanal-Dienstes zugeordnet sind und
von dem Kommunikationsendgerät (K) auf der Basis der Adressdaten mit Hilfe eines zur Verarbeitung dieser Adressdaten ausgelegten Kommunikationsprotokolls über eine zweite Schnittstelle (S2) eine Kommunikationsverbindung zu einem, dem Betreiber des Rückkanal-Dienstes zugeordneten externen Server herstellt wird, auf dem die Adressdaten als Zieladressdaten hinterlegt sind, so dass ein Rückkanal für Nutzdaten bereit gestellt wird, die sich auf die Broadcast-Nutzdaten beziehen.

2. Verfahren nach Anspruch 1,
**dadurch gekennzeichnet, dass**
der Broadcast-Server (BS) unmittelbar mit dem externen Server verbunden wird.

3. Verfahren nach Anspruch 1,
**dadurch gekennzeichnet, dass**
der externe Server von einem IP-Multimedia-Untersystem bereitgestellt wird.

4. Verfahren nach einem der Ansprüche 1 bis 3,
**dadurch gekennzeichnet, dass**
auf Seiten des Kommunikationsendgerätes (K) und des externen Servers als das Protokoll das standardisierte Session-Initiation-Protokoll verwendet wird und die Adressdaten diesem Protokoll entsprechen.

5. Verfahren nach einem der Ansprüche 1 bis 4,
**dadurch gekennzeichnet, dass**
die Kommunikationsverbindung zwischen dem Kommunikationsendgerät (K) und dem externen Server von dem Kommunikationsendgerät (K) aus ausgelöst wird.

6. Kommunikationsendgerät (K) mit einer ersten Schnittstelle (S1) zur Kommunikation mit einem Broadcast-Server (BS), der Broadcast-Nutzdaten bereit stellt, und einer zweiten Schnittstelle (S2),
**dadurch gekennzeichnet, dass**
es zum Extrahieren von Adressdaten aus einem empfangenen Broadcast-Nutzdatenstrom ausgebildet ist und
derart ausgebildet ist, dass es auf der Basis der Adressdaten mit Hilfe eines zur Verarbeitung dieser Adressdaten ausgelegten Kommunikationsprotokolls über eine zweite Schnittstelle (S2) eine Kommunikation zu einem externen Server herstellt, auf dem die Adressdaten als Zieladressdaten hinterlegt sind.

7. Kommunikationsendgerät (K) nach Anspruch 6,
**dadurch gekennzeichnet, dass**
auf dem Kommunikationsendgerät (K) als das Kommunikationsprotokoll das standardisierte Session-Initiation-Protocol vorliegt und die Adressdaten diesem Protokoll entsprechen.

8. Kommunikationsendgerät (K) nach einem der Ansprüche 6 oder 7,
**dadurch gekennzeichnet, dass**
das Kommunikationsendgerät (K) mobil ausgeführt ist.
